## Europäisches Patentamt
## European Patent Office
## Office européen des brevets

(11) Veröffentlichungsnummer: **0 143 229**
**B1**

(12) **EUROPÄISCHE PATENTSCHRIFT**

(45) Veröffentlichungstag der Patentschrift:
**10.06.87**

(51) Int. Cl.⁴: **G 21 C 1/02**, G 21 C 13/02

(21) Anmeldenummer: **84110886.3**

(22) Anmeldetag: **12.09.84**

(54) **Kernenergieanlage mit vereinfachter Lecksicherung des Kühlmittelkreislaufes.**

(30) Priorität: **26.09.83 DE 3334821**

(43) Veröffentlichungstag der Anmeldung:
**05.06.85 Patentblatt 85/23**

(45) Bekanntmachung des Hinweises auf die Patenterteilung:
**10.06.87 Patentblatt 87/24**

(84) Benannte Vertragsstaaten:
**BE DE FR GB IT NL**

(56) Entgegenhaltungen:
**DE-A-1 564 054**
**DE-A-1 815 046**
**FR-A-2 196 506**

(73) Patentinhaber: **INTERATOM Gesellschaft mit beschränkter Haftung, Friedrich- Ebert- Strasse, D-5060 Bergisch Gladbach 1 (DE)**

(72) Erfinder: **Hahn, Günter, Dipl.- Ing., Am Brücker Bach 42, D-5060 Bergisch- Gladbach (DE)**

(74) Vertreter: **Mehl, Ernst, Dipl.- Ing., Postfach 22 01 76, D-8000 München 22 (DE)**

## Beschreibung

Die vorliegende Erfindung betrifft eine Kernenergieanlage nach dem Oberbegriff des ersten Anspruchs; zu den Anlagen im Sinne dieser Anmeldung sollen auch solche Anlagen zählen, die nicht in erster Linie der Energieerzeugung dienen, in denen jedoch trotzdem Energie freigesetzt wird, die durch einen Kühlkreislauf abgeführt werden muß, z.B. Anlagen zur Lagerung bestrahlter Brennelemente. Die Erfindung ist mit besonderem Nutzen auf solche Anlagen anzuwenden, in denen ein Kühlmittel wie flüssiges Natrium verwendet wird, das bekannterweise bei Kontakt mit Luft und/oder mit Wasser unter Flammenentwicklung heftig reagiert. In diesem Falle sind wichtige Instrumente und Regeleinrichtungen auch durch den Austritt nicht radioaktiven Kühlmittels gefährdet, wie es bei den oben genannten Reaktoren in einem Zwischenkreislauf zirkuliert, der die Wärme von einem radioaktiven ersten Kreislauf über Wärmetauscher an einen dritten, das eigentliche Arbeitsmittel (Wasser/Dampf) enthaltenden Kreislauf überträgt. Eine solche Gefährdung muß vor allem im Primärbereich der Anlage verhindert werden. Hierzu ist bereits vorgeschlagen worden, den im Primärbereich verlaufenden Teil des Zwischenkreislaufes, im wesentlichen aus Rohrleitungen bestehend, doppelt zu ummanteln, wobei der Zwischenraum zwischen den beiden Mänteln mit einem Inertgas gefüllt und auf das Auftreten von Leckagen im Kreislauf überwacht wird. Die Doppelmantelkonstruktion wirft jedoch neue Probleme auf, so z.B. bei der Sicherung des Innenrohres gegen Schwingungen, wie sie durch Erdbeben hervorgerufen werden können; ferner die unterschiedliche Wärmedehnung zwischen Innen- und Außenmantel, insbesondere bei grösseren, aus Gründen des Ausgleichs von Wärmedehnungen in Schleifen geführten Konstruktionen. Schwierigkeiten ergeben sich auch bei den erforderlichen regelmäßigen Inspektionen des Innenmantels.

Aufgabe der vorliegenden Erfindung ist die Konstruktion einer Kernenergieanlage, bei der einerseits die vorstehenden Nachteile vermieden werden und andererseits, insbesondere im Primärbereich, eine verbesserte Absicherung der übrigen Anlagenteile gegen die Folgen eines Kühlmittelverlustes aus dem Zwischenkreislauf erreicht wird.

Die Lösung dieser Aufgabe geschieht durch die im kennzeichnenden Teil des ersten Anspruchs angegebenen Mittel. Durch ein möglichst nahes Heranrücken des Wärmetauschers an die Zwischenwand, die den Primär- vom Sekundärbereich trennt wird erreicht, daß die dann nur noch erforderlichen kurzen rohrförmigen Teile des Zwischenkreislaufes als Doppelmantelkonstruktion ausgeführt werden können, ohne daß die oben angesprochenen Nachteile auftreten. Dadurch, daß der Außenmantel mit der Zwischenwand dicht (wegen des erforderlichen Ausgleiches von Wärmedehnungen jedoch elastisch) verbunden ist, stellt dieser Außenmantel gewissermaßen eine Fortsetzung der Zwischenwand dar, so daß sich der gesamte Zwischenkreislauf, soweit er ausserhalb des Wärmetauschers verläuft im Sekundärbereich befindet, wo eine etwaige Leckage zu keiner Gefährdung von für den Betrieb des eigentlichen Reaktors (bzw. des Brennelementlagers) wichtigen Einrichtungen führen kann.

Oftmals wird sich aus übergeordneten Gründen ein dichtes Heranrücken des Wärmetauschers an die üblicherweise in nur einer Ebene verlaufende Zwischenwand nicht im erforderlichen Maße realisieren lassen. Für diesen Fall wird die im zweiten Anspruch definierte Ausgestaltung der Erfindung vorgeschlagen, die bei nur geringem baulichen Mehraufwand dennoch die oben dargelegten Vorteile zu erzielen gestattet.

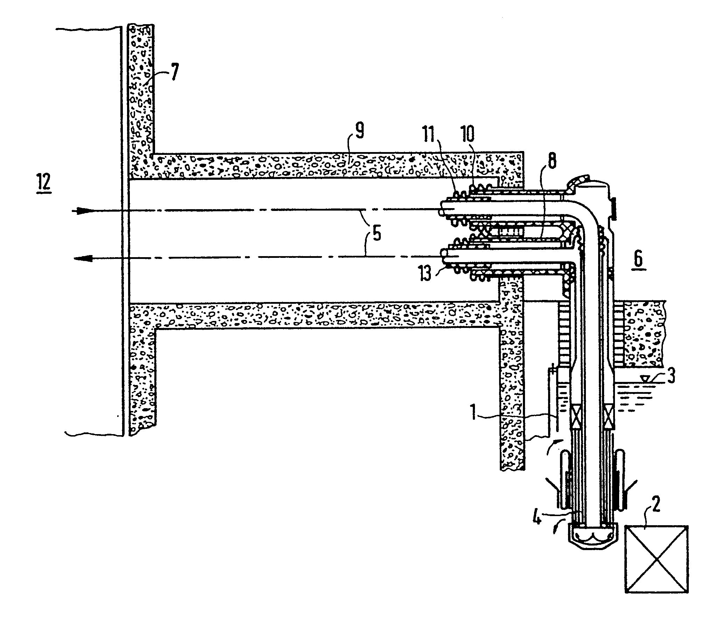

Ein Beispiel der Erfindung ist in der Zeichnung dargestellt, und zwar zeigt die Figur den für das Verständnis der Erfindung wesentlichen Teil einer Kernenergieanlage im Längsschnitt.

In einem Reaktortank 1 ist eine hier nur schematisch angedeutete Spaltzone 2 angeordnet, in der Wärme erzeugt und an ein den Tank 1 bis zu einem Spiegel 3 füllendes Kühlmittel (z.B. flüssiges Natrium) abgegeben wird. Die Abfuhr der Wärme erfolgt über einen in den Tank 1 eintauchenden Wärmetauscher 4 an einen Zwischenkreislauf 5, der ebenfalls flüssiges Natrium enthalten kann und in bekannter Weise seinerseits die Wärme in einem hier nicht gezeigten weiteren Wärmetauscher an verdampfendes Wasser abgibt. Der Reaktortank 1 ist in einem sogenannten Primärbereich 6 angeordnet, der durch eine im wesentlichen in einer senkrechten Ebene verlaufende Zwischenwand 7 von einem Sekundärbereich 12 getrennt ist. Würde an den Rohrleitungen des Zwischenkreislaufes 5 im Primärbereich ein Leck auftreten, so könnten durch das dann austretende und wo möglich mit Luft und/oder Wasser reagierende Kühlmittel hier nicht gezeigte, z.B. auf dem Deckel des Reaktortanks 1 angeordnete Instrumentierungen und für die Sicherheit des Reaktorbetriebs wichtige Regeleinrichtungen gefährdet werden. Auch bei einem Ausbleiben der Reaktion des Kühlmittels muß unter Umständen mit Schäden gerechnet werden. Die Rohrleitungen des Zwischenkreislaufes 5 sind daher im Primärbereich 6 mit Doppelmänteln 8 versehen, die hier gerade verlaufen und nur eine geringe Längenausdehnung zu besitzen brauchen, so daß sich keine Schwierigkeiten durch die Abstützung des Innenrohres im Außenrohr und durch Wärmedehnungen ergeben können. Hierzu ist gemäß der Erfindung der Reaktortank 1 bzw. der Ein- und Austritt des Zwischenkreislaufes 5 in den Wärmetauscher 4 in eine möglichst große Nähe zur Zwischenwand 7 gerückt worden. Um den im Primärbereich verlaufenden Teil des Zwischenkreislaufes 5 weiter abzukürzen, setzt sich die Zwischenwand 7 in Kanälen 9 fort, die einen integralen Bestandteil derselben bilden und deren Inneres dem Sekundärbereich 12 zuzurechnen ist. Die Doppelmäntel 8 sind mit der Zwischenwand 7 bzw. dem Kanal 9 dicht, aber elastisch über Wellrohrkompensatoren 10 verbunden. Weitere Wellrohrkompensatoren 11 verbinden die Doppelmäntel 8 mit den Rohrleitungen 5, dabei den Spalt zwischen beiden abdichtend. Die Wellrohrkompensatoren 10, 11 sind leicht demontierbar ausgeführt, um bei Inspektionsarbeiten einen leichten Zugang zu dem Zwischenraum zu ermöglichen. Im Sekundärbereich 12 können die Rohrleitungen des Zwischenkreislaufes 5 ohne besondere Ummantelung (abgesehen von einer Wärmeisolierung 13) verlegt werden und auch die erforderlichen, hier nicht dargestellten Wärmedehnschleifen erhalten.

**Patentansprüche**

1. In einem Gebäude angeordnete Kernenergieanlage, die durch eine Zwischenwand (7) in einen den Kernreaktor (2) enthaltenden Primärbereich (6) und einen die nicht aktiven Anlagenteile enthaltenden Sekundärbereich (12) getrennt ist mit einem Wärmetauscher (4), in dem die im Kernreaktor erzeugte Wärme an einen sich über beide Bereiche erstreckenden Zwischenkreislauf (5) übertragen wird, der im Primärbereich (6) mit einem Doppelmantel (8) versehen ist,
   dadurch gekennzeichnet,
   daß der Wärmetauscher (4) und die Zwischenwand (7) so zueinander angeordnet sind, daß der im Primärbereich (6) befindliche Teil des Zwischenkreislaufes (5) aus geraden möglichst kurzen Rohrstücken besteht, deren Doppelmantel (8) mit der Zwischenwand dicht verbunden ist.

2. Anlage nach Anspruch 1, mit im Abstand von der Zwischenwand (7) aufgestelltem Wärmetauscher (4), gekennzeichnet durch von der Zwischenwand (7) in Richtung auf den Wärmetauscher (4) verlaufende, einen Teil derselben bildende Kanäle (9) zur Aufnahme der Rohrleitungen des Zwischenkreislaufes (5).

**Claims**

1. A nuclear energy system which is installed in a building divided by a partition wall (7) into a primary zone (6), containing the nuclear reactor (2), and a secondary zone (12), containing the non-active system components, comprising a heat erchanger (4) in which the heat generated in the nuclear reactor is transferred to an intermediate circuit (5) which extends across both zones and which is provided with a double casing (8) in the primary zone (6), characterised in that the heat exchanger (4) and the partition wall (7) are arranged in relation to one another in such a manner that that part of the intermediate circuit (5) which is contained in the primary zone (6) consists of straight tubular components of the shortest possible length, the double casing (8) of which is sealingly connected to the partition wall.

2 A system as claimed in Claim 1, comprising a heat exchanger (4) which is installed at a distance from the partition wall (7), characterised by channels (9) which extend from the partition wall (7) towards the heat exchanger (4), which form part of said partition wall, and which serve to accommodate the pipelines of the intermediate circuit (5).

**Revendications**

1. Installation nucléaire qui est disposée dans un bâtiment et qui est subdivisée par un mur intermédiaire (7) en une zone primaire (6) contenant le réacteur nucléaire (2) et en une zone secondaire (12) contenant les parties de l'installation qui ne sont pas actives, comprenant un échangeur de chaleur (4) dans lequel la chaleur produite dans le reacteur nucléaire est transmise à un circuit intermédiaire (5) qui s'étend sur les deux zones et qui est muni d'une chemise double (8) dans la zone primaire (6),
   caractérisée en ce que,
   l'échangeur de chaleur (4) et le mur intermédiaire (7) sont disposés l'un par rapport à l'autre, de sorte que la partie du circuit intermédiaire (5) qui se trouve dans la zone primaire (6) est constituée de tronçons de tuyaux rectilignes aussi courts que possible, dont la chemise double (8) est reliée, de manière étanche, au mur intermédiaire.

2. Installation suivant la revendication 1, ayant un échangeur de chaleur (4) disposé à distance du mur intermédiaire (7), caractérisée par des canaux (9) qui vont du mur intermédiaire (7) en direction de l'échangeur de chaleur (4), qui forment une partie de mur intermédiaire et qui sont destinés à la réception des canalisations du circuit intermédiaire (5).